# EUROPEAN PATENT SPECIFICATION

(11) **EP 2 814 231 B1**
(45) Date of publication and mention of the grant of the patent: **01.02.2017**
(21) Application number: 13171923.9
(22) Date of filing: 13.06.2013
(51) Int. Cl.: H04M 1/725, G06Q 20/32, G06Q 20/34

(54) **Mobile wireless communications device having digital wallet with multi-mode user card and related methods**
Mobile drahtlose Kommunikationsvorrichtung mit digitaler Brieftasche mit Mehrmodus-Benutzerkarte und zugehörige Verfahren
Dispositif de communications sans fil mobile ayant un portefeuille numérique avec carte utilisateur multimode et procédés associés

(43) Date of publication of application: 17.12.2014
(73) Proprietor: BlackBerry Limited, Waterloo, ON N2K 0A7 (CA)
(72) Inventor: Adams, Neil Patrick, Waterloo, Ontario, N2K 0A7 (CA); Singh, Ravi, Mississauga, Ontario, L4W 0B5 (CA); Macgillivray, Geofrey Wendell, Waterloo, Ontario, N2K 0A7 (CA)
(74) Representative: Roberts, Gwilym Vaughan

(56) References cited:
- WO-A1-2006/095212
- WO-A2-2009/018255
- WO-A2-2009/055704
- DE-A1-102011 016 821
- US-A1- 2012 209 630

## Description

### Technical Field

This application relates to the field of communications, and more particularly, to mobile wireless communications devices and related methods.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the Internet via a cellular network and/or a wireless local area network (WLAN), for example.

Some mobile devices incorporate contactless card technology and/or near field communication (NFC) chips. NFC technology is commonly used for contactless short-range communications based on radio frequency identification (RFID) standards, using magnetic field induction to enable communication between electronic devices, including mobile wireless communications devices. This short-range high frequency wireless communications technology exchanges data between devices over a short distance, such as only a few centimeters. New uses or improvements regarding data/features for mobile communication devices and/or short range communications, such as NFC, may be desired.

WO 2009/018255 relates to a virtual card selector for a portable electronic device.

WO 2009/055704 relates a method for selecting payment applications at a point of sale.

### Brief Description of the Drawings

FIG. 1 is a schematic block diagram of an example embodiment of a communication system.
FIGS. 2-3 are screenshots from a mobile wireless communications device from the communication system of FIG. 1.
FIG. 4 is a flowchart illustrating operation of the mobile wireless communications device from the communication system of FIG. 1.
FIG. 5 is a schematic block diagram of an example embodiment of a mobile wireless communications device.
FIGS. 6-7 are screenshots from the mobile wireless communications device of FIG. 5.
FIG. 8 is a flowchart illustrating operation of the mobile wireless communications device of FIG. 5.
FIG. 9 is a schematic block diagram of another example embodiment of a mobile wireless communications device.
FIGS. 10-11 are screenshots of from the mobile wireless communications device of FIG. 9.
FIG. 12 is a flowchart illustrating operation of the mobile wireless communications device of FIG. 9.
FIG. 13 is a schematic block diagram of yet another example embodiment of a mobile wireless communications device.
FIGS. 14-15 are screenshots of from the mobile wireless communications device of FIG. 13.
FIG. 16 is a flowchart illustrating operation of the mobile wireless communications device of FIG. 13.
FIG. 17 is a schematic block diagram illustrating example components of a mobile wireless communications device that may be used with the communication system of FIG. 1.

### Detailed Description

The present description is made with reference to the accompanying drawings, in which embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements or steps in alternative embodiments.

Generally speaking, a communication system may include a terminal comprising a first NFC device. The terminal may be capable of receiving data from a provisioning server. The communication system may also include a mobile wireless communications device. The mobile wireless communications device may include a housing, a wireless transceiver, for example, a cellular transceiver, carried by the housing, a second NFC device carried by the housing, a memory carried by the housing, a display carried by the housing, and a processor carried by the housing and coupled to the wireless transceiver, the second NFC device, the memory, and the display. The processor may be configured to implement a digital wallet comprising a plurality of user cards, receive from the terminal, via the second NFC device, a blank user card including a plurality of user data fields, and fill the plurality of user data fields of the blank user card to define a completed user card and send the completed user card to the provisioning server.

The processor may be configured to receive a confirmation message from the provisioning server, and to store the completed user card in the memory for the digital wallet after receipt of the confirmation message. The processor may also be configured to store in the memory default user data for the digital wallet, and to fill the plurality of user data fields based upon the stored default user data.

More specifically, the processor may be configured to display the completed user card on the display. In some embodiments, the processor may be configured to send the completed user card to the provisioning server via the wireless transceiver. In other embodiments, the processor may be configured to send the completed user card to the provisioning server via the second NFC device.

For example, the terminal may comprise a point-of-sale (POS) terminal. The blank user card may have a return address for the provisioning server associated therewith. Also, the plurality of user data fields may comprise a name field, a mailing address field, and an email address field.

Another aspect is directed to a method of operating a mobile wireless communications device communicating with a terminal comprising a first NFC device, the terminal being capable of receiving data from a provisioning server. The method may comprise using a processor and memory cooperating therewith in the mobile wireless communications device to implement a digital wallet comprising a plurality of user cards, receive from the terminal, via a second NFC device in the mobile wireless communications device, a blank user card including a plurality of user data fields, and fill the plurality of user data fields of the blank user card to define a completed user card and send the completed user card to the provisioning server.

Yet another aspect is directed to a mobile wireless communications device including a housing, a wireless transceiver, for example, a cellular transceiver, carried by the housing, a location determining device carried by the housing and configured to determine a current location, a memory carried by the housing, a display carried by the housing, and a processor carried by the housing and coupled to the wireless transceiver, the location determining device, the memory, and the display. The processor may be configured to implement a digital wallet comprising at least one multi-mode user card having first and second user interface modes, and selectively change the at least one multi-mode user card from the first user interface mode to the second user interface mode based upon the current location. The second user interface mode may comprise a mapping interface mode.

For example, the at least one multi-mode user card may comprise a customer loyalty card, a coupon card, or an event ticket card. The first user interface mode may comprise a card display mode. The processor may be configured to store in the memory a trigger location associated with the at least one multi-mode user card, and selectively change the at least one multi-mode user card from the first user interface mode to the second user interface mode based upon the current location being within a threshold distance of the trigger location. The mapping interface mode may comprise a navigational direction mode.

Another aspect is directed to a mobile wireless communications device that may comprise a housing, a wireless transceiver carried by the housing, and a time determining device carried by the housing and configured to determine a current time. The mobile wireless communications device may also include a memory carried by the housing, a display carried by the housing, and a processor carried by the housing and coupled to the wireless transceiver, the time determining device, the memory, and the display. The processor may be configured to implement a digital wallet comprising at least one multi-mode user card having first and second user interface modes, and selectively change the at least one multi-mode user card from the first user interface mode to the second user interface mode based upon the current time, the second user interface mode comprising at least one of a survey interface mode and a purchase interface mode.

The first user interface mode may comprise a card display mode. The processor may be configured to store in the memory a trigger time associated with the at least one multi-mode user card, and selectively change the at least one multi-mode user card from the first user interface mode to the second user interface mode based upon the current time being within a threshold time of the trigger time.

Another aspect is directed to a mobile wireless communications device including a housing, a wireless transceiver carried by the housing, an event determining device carried by the housing and configured to determine an event, a memory carried by the housing, a display carried by the housing, and a processor carried by the housing and coupled to the wireless transceiver, the event determining device, the memory, and the display. The processor may be configured to implement a digital wallet comprising at least one multi-mode user card having first and second user interface modes, and selectively change the at least one multi-mode user card from the first user interface mode to the second user interface mode based upon the determined event, the second user interface mode comprising at least one of a survey interface mode and a purchase interface mode. The first user interface mode may comprise a card display mode.

Another aspect is directed to a method of operating a mobile wireless communications device that may include using a processor coupled to a wireless transceiver, a location determining device, a memory, and a display to implement a digital wallet comprising at least one multi-mode user card having first and second user interface modes, and selectively change the at least one multi-mode user card from the first user interface mode to the second user interface mode based upon a current location. The second user interface mode may comprise a mapping interface mode.

Another aspect is directed to a method of operating a mobile wireless communications device that may include using a processor coupled to a wireless transceiver, a time determining device, a memory, and a display to implement a digital wallet comprising at least one multi-mode user card having first and second user interface modes, and selectively change the at least one multi-mode user card from the first user interface mode to the second user interface mode based upon a current time. The second user interface mode may comprise at least one of a survey interface mode and a purchase interface mode.

Another aspect is directed to a method of operating a mobile wireless communications device that may include using a processor coupled to a wireless transceiver, an event determining device, a memory, and a display to implement a digital wallet comprising at least one multi-mode user card having first and second user interface modes, and selectively change the at least one multi-mode user card from the first user interface mode to the second user interface mode based upon a determined event. The second user interface mode may comprise at least one of a survey interface mode and a purchase interface mode.

Example mobile wireless communications devices may include portable or personal media players (e.g., music or MP3 players, video players, etc.), remote controls (e.g., television or stereo remotes, etc.), portable gaming devices, portable or mobile telephones, smartphones, tablet computers, etc.

By way of background, NFC is a short-range wireless communications technology in which NFC-enabled devices are "swiped," "bumped" or otherwise moved in close proximity to communicate. In one non-limiting example implementation, NFC may operate at 13.56 MHz and with an effective range of about 10cm, but other suitable versions of near-field communication, which may have different operating frequencies, effective ranges, etc., for example, may also be used.

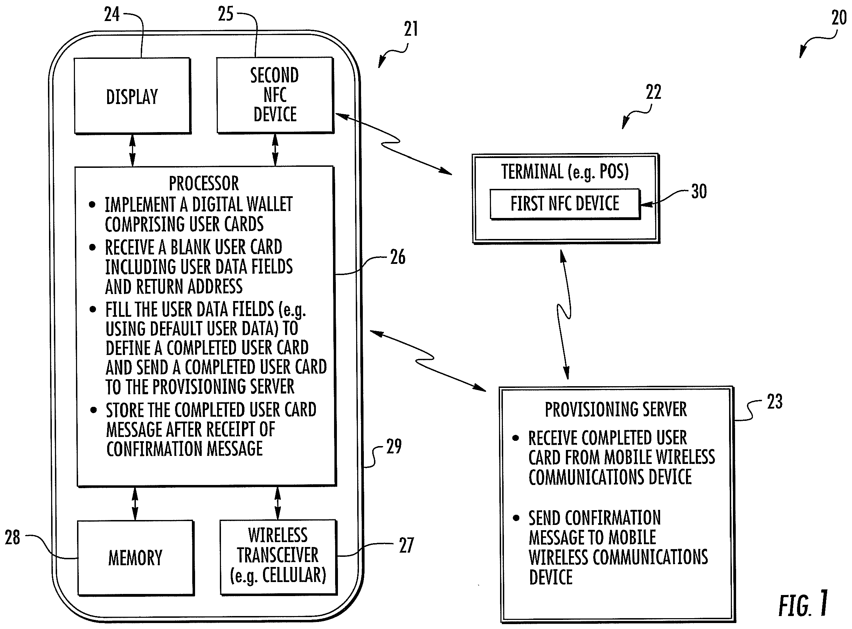

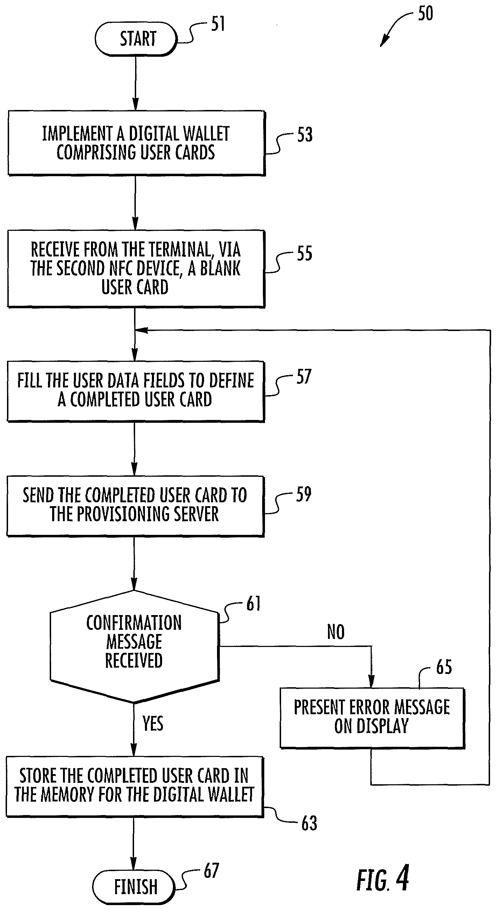

Referring now to FIGS. 1-3, a communication system **20** according to the present disclosure is now described. Moreover, with reference additionally to FIG. 4, a flowchart **50** illustrates a method of operating the communication system **20,** the flowchart starting at Block **51.**

The communication system **20** illustratively includes a terminal **22** comprising a first NFC device **30.** In the illustrated embodiment, the terminal **22** comprises a POS terminal. The POS terminal may be collocated at a vendor location and include a payment receiving device (e.g. a cash register, or an inventory management terminal). The terminal **22** is capable of receiving data from a provisioning server **23.** For example, the terminal **22** may be coupled to the provisioning server **23** via a networking arrangement, such as a local area network or the Internet. In some embodiments, the terminal **22** and the provisioning server 23 may be coupled as one device. Also, the terminal **22** may include other wireless transceivers, such as a Bluetooth transceiver or a WiFi transceiver.

The provisioning server **23** and the terminal **22** may be operated by the same vendor to provide an enhanced customer service. For example, the vendor may maintain a database comprising a plurality of customer user profiles.

The communication system **20** illustratively includes a mobile wireless communications device **21.** The mobile wireless communications device **21** illustratively includes a housing **29,** and a wireless transceiver **27** carried by the housing. The wireless transceiver **27** may comprise one or more of a cellular transceiver, an infrared transceiver, and a WLAN transceiver, such as Bluetooth, ZigBee, etc. The mobile wireless communications device **21** illustratively includes a second NFC device **25** carried by the housing **29,** a memory **28** carried by the housing, a display **24** carried by the housing, and a processor **26** carried by the housing and coupled to the wireless transceiver **27,** the second NFC device, the memory, and the display.

The processor **26** is configured to implement a digital wallet comprising a digital user card or a plurality of user cards (Block **53**). The plurality of cards may comprise a customer loyalty card, a coupon card, an event ticket card, a credit card, a bank debit card, and/or other cards or various combinations of cards. Indeed, one or more of these digital cards may be maintained by the vendor using the provisioning server **23** and the terminal **22.**

As will be appreciated, when the user accesses the digital wallet, the plurality of user cards may be presented on display **24** in list format or in some embodiments, presented as a corresponding plurality of card like icons, such as a tiled interface. For security, the digital wallet may be secured via a password, such as a numerical code, a finger gesture based lock, etc.

The processor **26** is configured to receive from the terminal **22,** via the second NFC device **25,** a blank user card including a plurality of user data fields (Block **55**). The blank user card is provided from the provisioning server **23** and is associated with the database of the vendor. The plurality of user data fields may comprise a name field, a mailing address field, and an email address field. More or less user data fields may be provided. In short, the user data fields request the information needed to successfully subscribe/provision the user with a user card/account for the database of the vendor. More information may be requested.

The mobile wireless communications device **21** may receive the blank user card from multiple sources. In the illustrated embodiment, the mobile wireless communications device **21** receives the blank user card from the terminal **22** via an NFC link. In other words, the mobile wireless communications device **21** is bumped with the terminal **22.** For example, in POS device embodiments, the user may bump the mobile wireless communications device **21** during a typical sale. In some embodiments, the terminal **22** may not communicate directly with the provisioning server **23,** but only provide the blank user card to the mobile wireless communications device **21.**

In other embodiments, the mobile wireless communications device **21** may receive the blank user card directly from the provisioning server **22** via a WLAN link using the Internet. Alternatively, the mobile wireless communications device **21** may receive the blank user card as an attachment within an email message. In yet another embodiment, the mobile wireless communications device **21** may receive a web link for the blank user card via the second NFC device **25,** and separately download the blank user card from an Internet accessible server. Also, the user may receive the blank user card from another mobile device, such as via an NFC bump with another NFC enabled mobile device. In yet another embodiment, the user may download the blank user card from a database thereof in a mobile application platform.

Subsequent to the bump, the processor **26** is configured to fill the plurality of user data fields **41a-41d** of the blank user card to define a completed user card (Block **57**). For example, the user may manually (other embodiments may include automatic completion or partially automatic completion) complete the user data fields **41a-41d** using an onboard user input interface, such as a physical keyboard, a virtual keyboard, or a voice input software module. Each user data field **41a-41d** may comprise a user field name and associated maximum number of characters permitted.

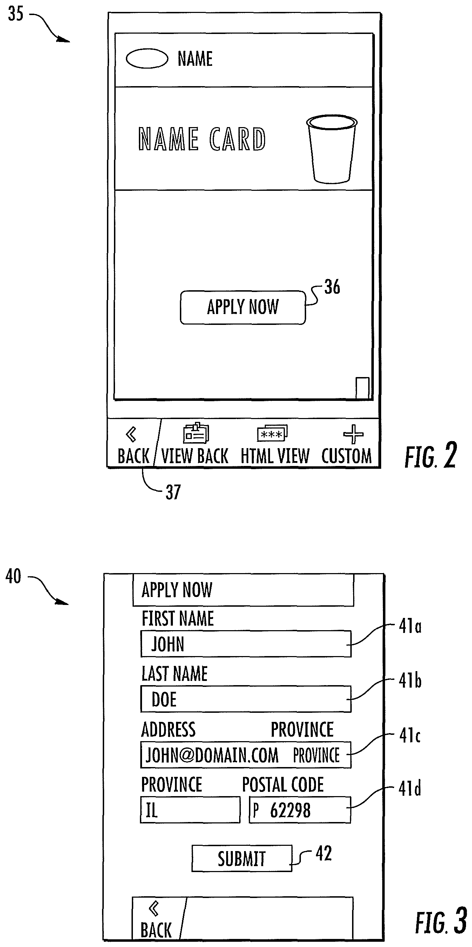

In the illustrated embodiment, once the blank user card is received, as shown in screenshot **35** (FIG. 2), the processor **26** presents an initial splash screen. The initial splash screen illustratively includes an "apply now" button **36** for initiating the provisioning process with the provisioning server **23,** and an option menu **37.** The option menu **37** illustratively includes a back button for canceling the provisioning process, thereby deleting the blank user card, and a hypertext markup language (HTML) option button. The HTML option button may launch the system web browser to the vendor website for out of band provisioning with the vendor. In other words, the user provisions a new user card outside the digital wallet. Also, the initial splash screen illustratively includes vendor logo information for identifying the associated vendor for the blank user card. The initial splash screen can also include terms of service information for the vendor. Although not illustrated, the option menu **37** may also include a feature for saving the blank user card, perhaps partially filled out, in the memory **28** for later submission. Once the user selects the "apply now" button **36,** the processor **26** initiates the provisioning process for the blank user card.

In some embodiments, the processor **26** may also be configured to store in the memory **28** default user data for the digital wallet. Advantageously, as shown in the screenshot **40** (FIG. 3), the processor **26** may automatically present the blank user card on the display **24** with the user data fields complete or partially complete. In these embodiments, the enrollment step is a one-step process since the processor **26** uses the stored default user data.

The screenshot **40** illustratively includes a submission button **42** for actuation by the user when the user data fields **41a-41d** are completed to user satisfaction. In some embodiments, the processor **26** may automatically submit, if the user fails to cancel the process, the completed user card after a set period of time. Once the user data fields **41a-41d** are complete and the user actuates the submission button **42,** the processor **26** is configured to send the completed user card to the provisioning server **23** (Block **59**). In some embodiments, the processor **26** may be configured to send the completed user card to the provisioning server **23** via the wireless transceiver **27** (e.g. over the Internet). The blank user card includes a return address for the provisioning server **23** associated therewith. For example, the return address may comprise an email address, or a uniform resource locater (URL). In some embodiments, the processor **26** executes the submission process based upon instructions in the blank user card.

In other embodiments, the processor **26** may be configured to send the completed user card to the provisioning server **23** via the second NFC device **25.** In these embodiments, the user would need to bump the terminal **22** a second time, perhaps during a subsequent purchase. In these embodiments, the processor **26** may store the completed user card in the memory **28** for time duration determined by the user's frequency of using the vendor. In other embodiments, the communication system **20** may include a second terminal comprising a third NFC device adjacent an exit of the vendor place of business, requiring a user bump on the way out of the vendor place of business.

Regardless of method of transmission, once the provisioning server **23** has received the completed user card, several basic accuracy checks are performed thereon (e.g. checking for improper email or mailing address format, validation of registration). If the basic accuracy checks are cleared, the provisioning server **23** generates a confirmation message (Block **61**). The processor **26** is configured to receive the confirmation message from the provisioning server **23.** Once this confirmation message is received, the processor **26** can complete the provisioning process and store the completed user card in the memory **28** for the digital wallet, replacing the completed user card with a provisioned version thereof (Block **63**). If the confirmation message is not received within a timeout period, the processor **26** will present an error message on the display **24** and return to the user data field completion step (Block **65**), before ending at Block **67.**

A method aspect is for operating a mobile wireless communications device **21** communicating with a terminal **22** comprising a first NFC device **30.** The terminal **22** is capable of receiving data from a provisioning server **23.** The method comprises using a processor **26** and memory **28** cooperating therewith in the mobile wireless communications device **21** to implement a digital wallet comprising a plurality of user cards, receive from the terminal **22,** via a second NFC device **25** in the mobile wireless communications device, a blank user card including a plurality of user data fields **41a-41d,** and filling the plurality of user data fields of the blank user card to define a completed user card and sending the completed user card to the provisioning server.

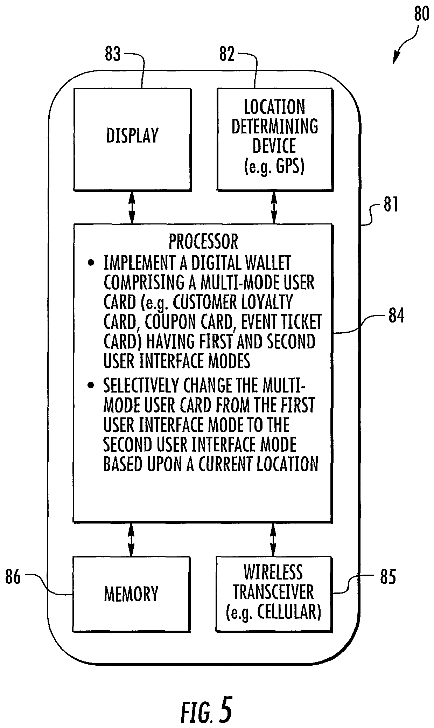

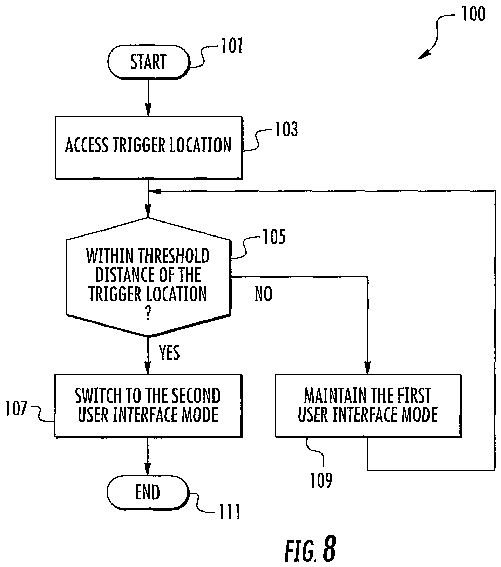

Referring now to FIGS. 5-7, another mobile wireless communications device **80** according to the present disclosure is now described. Moreover, with reference additionally to FIG. 8, a flowchart **100** illustrates a method of operating the mobile wireless communications device **80,** the flowchart starting at Block **101.**

The mobile wireless communications device **80** illustratively includes a housing **81,** and a wireless transceiver **85** carried by the housing. The wireless transceiver **85** may comprise one or more of a cellular transceiver, an infrared transceiver, and a WLAN transceiver, such as Bluetooth, ZigBee (IEEE 802.15.4), etc.

The mobile wireless communications device **80** illustratively includes a display **83,** a location determining device **82** carried by the housing **81** and configured to determine a current location, a memory **86** carried by the housing, and a processor **84** carried by the housing and coupled to the wireless transceiver **85,** the location determining device, the memory, and the display. For example, the location determining device **82** may comprise a global positioning system (GPS) receiver determining the current location to comprise a geolocation value. In other embodiments, the location determining device **82** may comprise a WLAN transceiver communicating with the Internet to determine location.

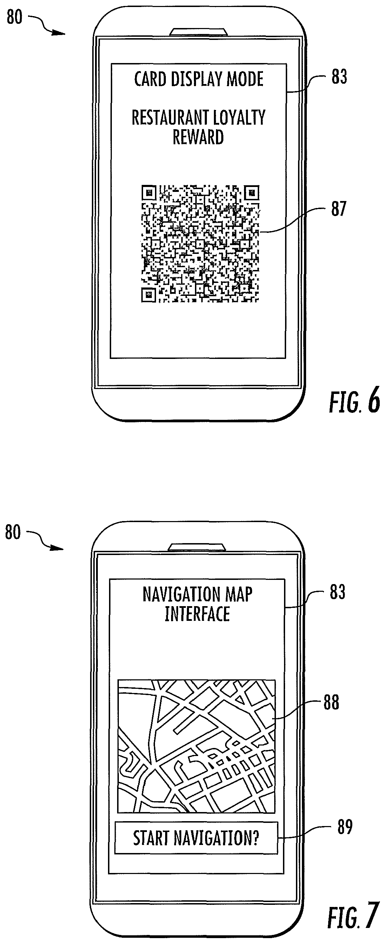

The processor **84** is configured to implement a digital wallet comprising one or more multi-mode user cards, each multi-mode user card having first (FIG. 6) and second (FIG. 7) user interface modes. The processor **84** is configured to selectively change at least one multi-mode user card from the first user interface mode to the second user interface mode based upon the current location (e.g. geolocation). For example, the at least one multi-mode user card may comprise a customer loyalty card, a coupon card, or an event ticket card.

In particular, the processor **84** is configured to store in the memory **86** a trigger location associated with the at least one multi-mode user card, and access the trigger location (Block **103**). The processor **84** is configured to selectively change the at least one multi-mode user card from the first user interface mode to the second user interface mode based upon the current location being within a threshold distance (e.g. 0.50 km, 100 meters, etc.) of the trigger location. The threshold distance may be speed based, i.e. if the mobile wireless communications device **80** is traveling at a high speed, the threshold distance may increase and vice versa. In some embodiments, the trigger location would be embedded in the at least one multi-mode user card. In other words, when the user installs the at least one multi-mode user card into the digital wallet, the associated vendor includes the trigger location therein.

In some embodiments, the trigger location may comprise a plurality thereof. For example, the plurality of trigger locations may comprise a plurality of vendor locations for the associated vendor of the at least one multi-mode user card. As shown in FIG. 6, the first user interface mode comprises a card display mode, i.e. a primary operation mode. When the mobile wireless communications device **80** is within a certain radius of one or more of the trigger locations, the at least one multi-mode user card switches to the second user interface mode (Blocks **105, 107**), before ending at Block **111.** Otherwise, the at least one multi-mode user card remains in the first user interface mode (Block **109**).

In the illustrated embodiment of FIGS. 6-7, the first user interface mode comprises a restaurant loyalty card reward having a quick response (QR) code **87.** When the at least one multi-mode user card switches to the second user interface mode, the second user interface mode includes a mapping interface mode **88.** For example, in the illustrated embodiment, the mapping interface mode **88** may include a navigational direction mode with a navigate start button **89.** Advantageously, when the user is nearby a vendor location, the at least one multi-mode user card may present the user with a map of the location and a one-click opportunity to launch a navigation application directed to that vendor location.

Another aspect is directed to a method of operating a mobile wireless communications device **80.** The method includes using a processor **84** coupled to a wireless transceiver **85,** a location determining device **82,** and a memory **86** to implement a digital wallet comprising at least one multi-mode user card having first and second user interface modes, and selectively change the at least one multi-mode user card from the first user interface mode to the second user interface mode based upon a current location, the second user interface mode comprising a mapping interface mode **88.**

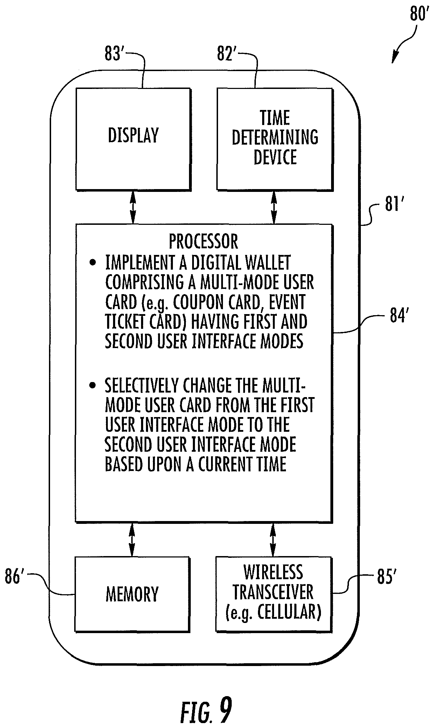

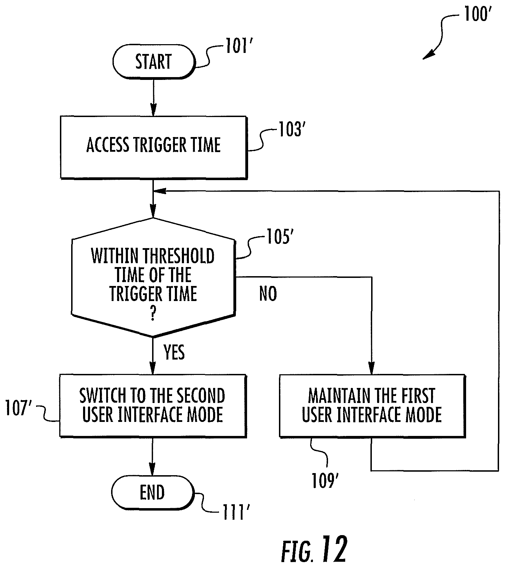

Referring now to FIGS. 9-11, another embodiment of the mobile wireless communications device **80'** according to the present disclosure is now described. Moreover, with reference additionally to FIG. 12, a flowchart **100'** illustrates another embodiment of a method of operating the mobile wireless communications device **80',** the flowchart starting at Block **101'.** In this embodiment of the mobile wireless communications device **80'** and method for operating therefor, those steps and elements already discussed above with respect to FIGS. 5-8 are given prime notation and most require no further discussion herein.

This mobile wireless communications device **80'** additionally includes a time determining device **82'** carried by the housing **81'** and configured to determine a current time. The time determining device **82'** may comprise an internal clock (hardware or software) or a module for accessing Internet timeservers. The mobile wireless communications device **80'** illustratively includes a memory **86'** carried by the housing **81',** and a processor **84'** carried by the housing and coupled to the wireless transceiver **85',** the time determining device **82',** and the memory.

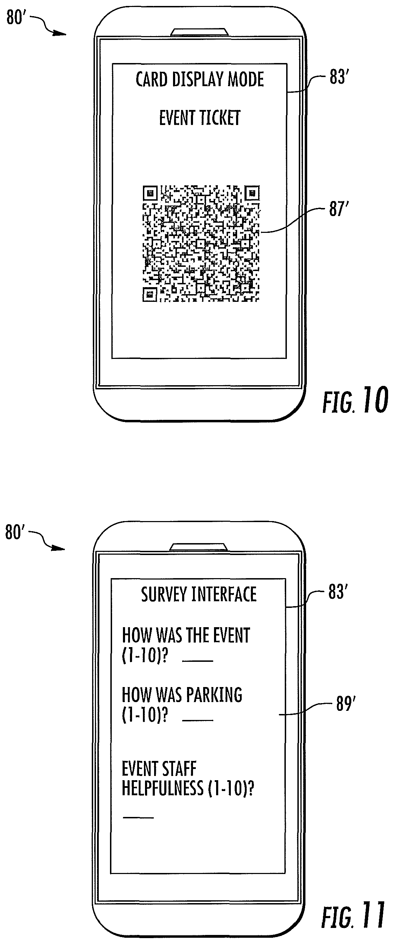

In this embodiment, the processor **84'** is illustratively configured to implement a digital wallet comprising at least one multi-mode user card having first (FIG. 10) and second (FIG. 11) user interface modes, and selectively change the at least one multi-mode user card from the first user interface mode to the second user interface mode based upon the current time. For example, the at least one multi-mode user card may comprise a coupon card, or an event ticket card.

The processor **84'** accesses a trigger time from the memory **86'.** As in the above embodiments, the trigger time may be embedded in the at least one multi-mode user card.

The first user interface mode may comprise a card display mode. In FIG. 10, the card display mode illustratively comprises an event ticket card having a QR code **87'.** The second user interface mode illustratively comprises a survey interface mode **89'.** In another embodiment, the second user interface mode may also comprise an option to purchase more tickets from the event provider, i.e. a purchase interface mode. In some embodiments, the purchase interface mode would be presented after the user completes a favorable survey in the survey interface mode.

The processor **84'** is configured to store in the memory **86'** the trigger time associated with the at least one multi-mode user card, and to access the trigger time periodically (Block **103'**). The processor **84'** is configured to selectively change the at least one multi-mode user card from the first user interface mode to the second user interface mode based upon the current time being within a threshold time (either before or after) of the trigger time (Blocks **105', 107'**), before ending at Block **111'.** For example, in the illustrative event ticket embodiment, the trigger time may comprise a time of expected event completion, and the threshold time may comprise 0-15 minutes. Advantageously, when the event for the event ticket card ends, the user is automatically presented with a survey interface mode **89'** for rating the event. The event may comprise, for example, a concert event ticket. The at least one multi-mode user card may include a return address for sending the completed survey to the source automatically and without user intervention. If the current time is not within the threshold time (Block **105'**), the first user interface mode is maintained (Block **109'**).

Another aspect is directed to a method of operating a mobile wireless communications device **80'.** The method includes using a processor **84'** coupled to a wireless transceiver **85',** a time determining device **82',** and a memory **86'** to implement a digital wallet comprising at least one multi-mode user card having first and second user interface modes, and selectively change the at least one multi-mode user card from the first user interface mode to the second user interface mode based upon a current time. The second user interface mode comprises a survey interface mode **89'.**

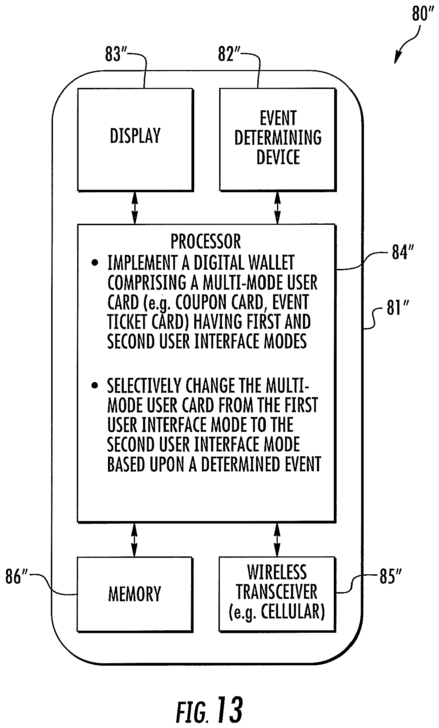

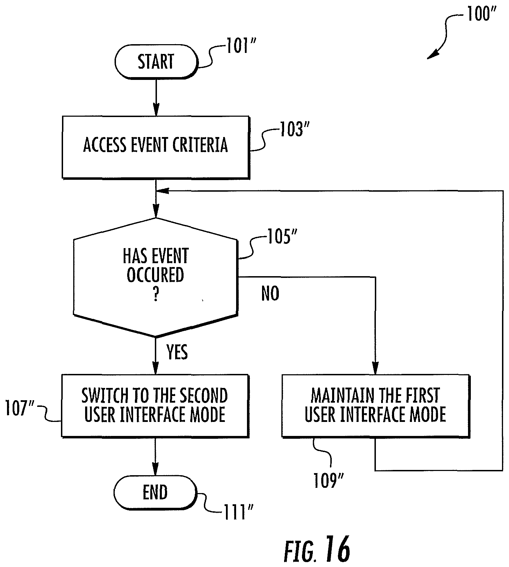

Referring now to FIGS. 13-15, another embodiment of the mobile wireless communications device **80"** according to the present disclosure is now described. Moreover, with reference additionally to FIG. 16, a flowchart **100"** illustrates another embodiment of a method of operating the mobile wireless communications device **80"**, the flowchart starting at Block **101**". In this embodiment of the mobile wireless communications device **80"** and method for operating therefor, those steps and elements already discussed above with respect to FIGS. 5-8 are given double prime notation and most require no further discussion herein.

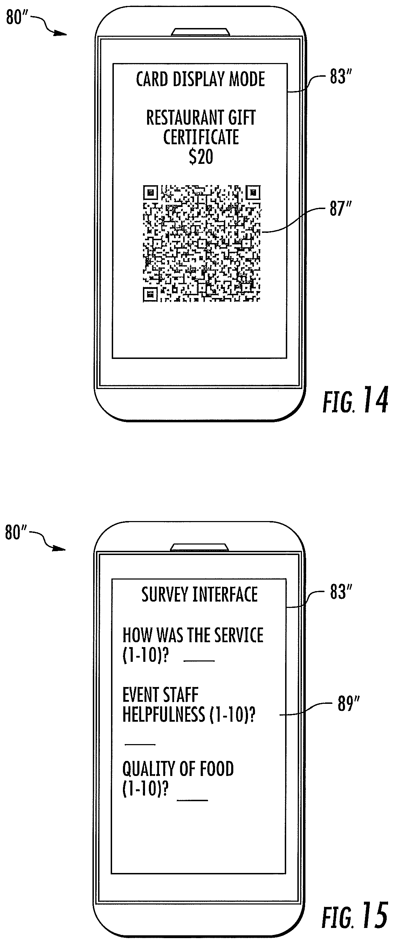

This mobile wireless communications device **80"** additionally includes an event determining device **82**" carried by the housing **81**" and configured to determine an event. The processor **84"** is configured to implement a digital wallet comprising at least one multi-mode user card having first (FIG. 14) and second (FIG. 15) user interface modes, and selectively change the at least one multi-mode user card from the first user interface mode to the second user interface mode based upon the determined event. For example, the at least one multi-mode user card may comprise a coupon card, or an event ticket card.

The first user interface mode may comprise a card display mode. In the illustrated embodiment, the first user interface mode comprises a restaurant gift certificate comprising a QR code **87**". The second user interface mode illustratively includes a survey interface mode **89"**.

The method illustratively includes accessing the event criteria stored in the memory **86"** (Block **103**"). In some embodiments, the event determining device **82**" is configured to monitor whether the at least one multi-mode user card has been used or redeemed (Block **105**"). For example, the processor **84"** is configured to monitor whether the QR code **87**" of the event ticket card has been scanned for admittance.

If the at least one multi-mode user card has been used or redeemed, the processor **84"** changes the at least one multi-mode user card from the first user interface mode to the second user interface mode (Block **107"**). Otherwise, the processor **84**" is configured to maintain the at least one multi-mode user card in the first user interface mode (Block **109"**), the method ends at Block **111**".

Another aspect is directed to a method of operating a mobile wireless communications device **80**". The method includes using a processor **84**" coupled to a wireless transceiver **85**", an event determining device **82**", and a memory **86"** to implement a digital wallet comprising at least one multi-mode user card having first and second user interface modes, and selectively change the at least one multi-mode user card from the first user interface mode to the second user interface mode based upon a determined event, the second user interface mode comprising a survey interface mode.

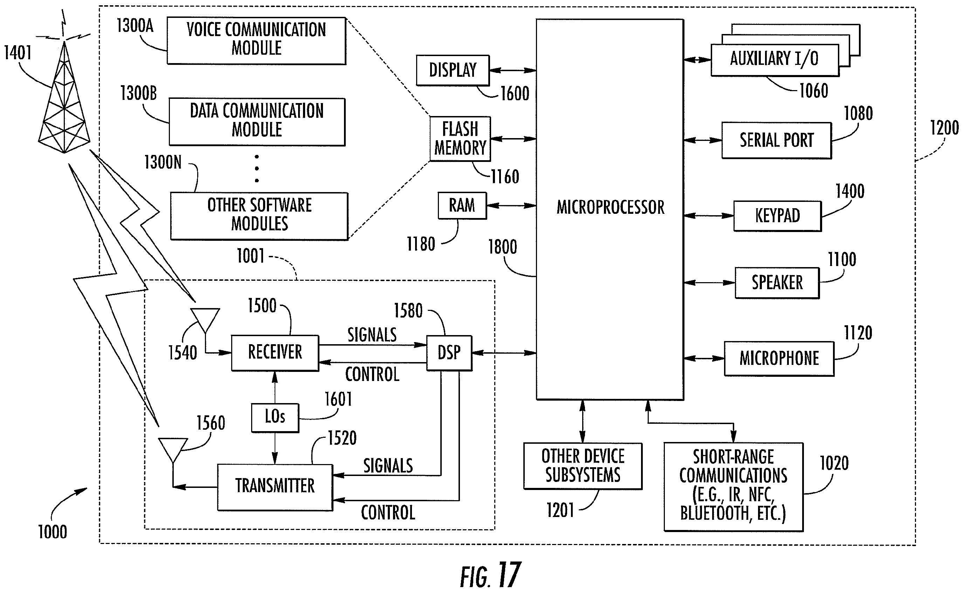

Example components of a mobile wireless communications device **1000** that may be used in accordance with the above-described embodiments are further described below with reference to FIG. 17. The device **1000** illustratively includes a housing **1200,** a keyboard or keypad **1400** and an output device **1600.** The output device shown is a display **1600,** which may comprise a full graphic liquid crystal display (LCD). Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 17. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem **1020.** The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as Advanced Mobile Phone System (AMPS), time division multiple access (TDMA), code division multiple access (CDMA), Wideband code division multiple access (W-CDMA), personal communications service (PCS), GSM (Global System for Mobile Communications), enhanced data rates for GSM evolution (EDGE), etc. Other types of data and voice networks, both separate and integrated, may also be utilized with the mobile device **1000.** The mobile device **1000** may also be compliant with other communications standards such as 3GSM, 3rd Generation Partnership Project (3GPP), Universal Mobile Telecommunications System (UMTS), 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth™ communications module to provide for communication with similarly-enabled systems and devices, or a NFC sensor for communicating with a NFC device or NFC tag via NFC communications.

Many modifications and other embodiments will come to the mind of one skilled in the art having the benefit of the teachings presented in the foregoing descriptions and the associated drawings. For example, in an alternative embodiment, instead of using NFC for the digital card information transfer, other wired or wireless communication networks or channels (such as other short range wireless networks) may be used. Therefore, it is understood that various modifications and embodiments are intended to be included within the scope of the appended claims.

## Claims

1. A mobile wireless communications device (21) comprising:
a housing (29);
a wireless transceiver (27) carried by said housing;
a memory (28) carried by said housing;
a display (24) carried by said housing; and
a processor (26) carried by said housing and coupled to said wireless transceiver, said memory, and said display, said processor configured to
determine a current time,
implement a digital wallet comprising at least one digital user card, the card having first and second user interface modes, and
selectively change the user interface mode associated with the at least one digital user card displayed on the display from the first user interface mode to the second user interface mode based upon the current time, the second user interface mode comprising at least one of a survey interface mode and a purchase interface mode.

2. The mobile wireless communications device (21) of claim 1 wherein the at least one digital user card comprises a coupon card.

3. The mobile wireless communications device (21) of claim 1 wherein the at least one digital user card comprises an event ticket card.

4. The mobile wireless communications device (21) of claim 1 wherein the first user interface mode comprises a card display mode.

5. A method of operating a mobile wireless communications device implemented by a processor comprising implementing a digital wallet comprising at least one digital user card, the card having first and second user interface modes, and selectively changing the user interface associated with the at least one digital user card displayed on a display from the first user interface mode to the second user interface mode based upon the current time, the second user interface mode comprising at least one of a survey interface mode and a purchase interface mode.

## Patentansprüche

1. Mobile drahtlose Kommunikationsvorrichtung (21), aufweisend:
ein Gehäuse (29);
einen drahtlosen Sender/Empfänger (27), der vom Gehäuse getragen wird;
einen Speicher (28), der vom Gehäuse getragen wird;
eine Anzeige (24), die vom Gehäuse getragen wird; und
einen Prozessor (26), der vom Gehäuse getragen wird und mit dem drahtlosen Sender/Empfänger, dem Speicher und der Anzeige verbunden ist, wobei der Prozessor konfiguriert ist für Bestimmen einer aktuellen Zeit,
Implementieren einer digitalen Brieftasche, die mindestens eine digitale Benutzerkarte aufweist, wobei die Karte einen ersten und einen zweiten Benutzerschnittstellenmodus hat, und
selektives Ändern des auf der Anzeige angezeigten Benutzerschnittstellenmodus, der zu der mindestens einen digitalen Benutzerkarte gehört, vom ersten Benutzerschnittstellenmodus zum zweiten Benutzerschnittstellenmodus auf der Grundlage der aktuellen Zeit, wobei der zweite Benutzerschnittstellenmodus mindestens einen von einem Übersichtsschnittstellenmodus und einem Einkaufsschnittstellenmodus aufweist.

2. Mobile drahtlose Kommunikationsvorrichtung (21) nach Anspruch 1, wobei die mindestens eine digitale Benutzerkarte eine Gutscheinkarte aufweist.

3. Mobile drahtlose Kommunikationsvorrichtung (21) nach Anspruch 1, wobei die mindestens eine digitale Benutzerkarte eine Veranstaltungseintrittskarte aufweist.

4. Mobile drahtlose Kommunikationsvorrichtung (21) nach Anspruch 1, wobei der erste Benutzerschnittstellenmodus einen Kartenanzeigemodus aufweist.

5. Verfahren zum Bedienen einer mobilen drahtlosen Kommunikationsvorrichtung, das von einem Prozessor implementiert wird, aufweisend ein Implementieren einer digitalen Brieftasche, die mindestens eine digitale Benutzerkarte aufweist, wobei die Karte einen ersten und einen zweiten Benutzerschnittstellenmodus hat, und ein selektives Ändern der auf einer Anzeige angezeigten Benutzerschnittstelle, die zu der mindestens einen digitalen Benutzerkarte gehört, vom ersten Benutzerschnittstellenmodus zum zweiten Benutzerschnittstellenmodus auf der Grundlage der aktuellen Zeit, wobei der zweite Benutzerschnittstellenmodus mindestens einen von einem Übersichtsschnittstellenmodus und einem Einkaufsschnittstellenmodus aufweist.

## Revendications

1. - Dispositif de communication sans fil mobile (21) comprenant :
un boîtier (29) ;
un émetteur-récepteur sans fil (27) porté par ledit boîtier ;
une mémoire (28) portée par ledit boîtier ;
un dispositif d'affichage (24) porté par ledit boîtier ; et
un processeur (26) porté par ledit boîtier et couplé audit émetteur-récepteur sans fil, à ladite mémoire et audit dispositif d'affichage, ledit processeur étant configuré pour :
déterminer un instant temporel courant,
implémenter un portefeuille numérique comprenant au moins une carte utilisateur numérique, la carte ayant des premier et second modes d'interface utilisateur, et
changer de manière sélective le mode d'interface utilisateur associé à l'au moins une carte utilisateur numérique affichée sur le dispositif d'affichage du premier mode d'interface utilisateur au second mode d'interface utilisateur sur la base de l'instant temporel courant, le second mode d'interface utilisateur comprenant au moins l'un d'un mode d'interface d'évaluation et d'un mode d'interface d'achat.

2. - Dispositif de communication sans fil mobile (21) selon la revendication 1, dans lequel l'au moins une carte utilisateur numérique comprend une carte de coupon.

3. - Dispositif de communication sans fil mobile (21) selon la revendication 1, dans lequel l'au moins une carte utilisateur numérique comprend une carte de billet d'évènement.

4. - Dispositif de communication sans fil mobile (21) selon la revendication 1, dans lequel le premier mode d'interface utilisateur comprend un mode d'affichage de carte.

5. - Procédé d'exploitation d'un dispositif de communication sans fil mobile implémenté par un processeur comprenant l'implémentation d'un portefeuille numérique comprenant au moins une carte utilisateur numérique, la carte ayant des premier et second modes d'interface utilisateur, et le changement de manière sélective de l'interface utilisateur associée à l'au moins une carte utilisateur numérique affichée sur un dispositif d'affichage du premier mode d'interface utilisateur au second mode d'interface utilisateur sur la base de l'instant temporel courant, le second mode d'interface utilisateur comprenant au moins l'un d'un mode d'interface d'évaluation et d'un mode d'interface d'achat.
